# EUROPEAN PATENT SPECIFICATION

(11) **EP 0 683 285 B1**
(45) Date of publication and mention of the grant of the patent: **07.04.1999**
(21) Application number: 95201293.8
(22) Date of filing: 17.05.1995
(51) Int. Cl.: E04D 1/34, F16B 5/02

(54) **Ridge tile hook**
Haken für Firstziegel
Crochet pour tuile faîtière

(30) Priority: 17.05.1994 NL 9400805
(43) Date of publication of application: 22.11.1995
(73) Proprietor: REDLAND DAKPRODUKTEN B.V., 3417 ZG Montfoort (NL)
(72) Inventor: Van den Berg, Garbrand, NL-3995 AM Houten (NL)
(74) Representative: de Bruijn, Leendert C.

(56) References cited:
- CH-A- 567 640
- DE-A- 1 750 591
- DE-A- 3 941 216
- FR-A- 2 352 127
- GB-A- 2 241 262
- GB-A- 2 242 722
- US-A- 1 544 391
- US-A- 2 279 943
- US-A- 4 314 433
- US-A- 4 959 886

## Description

The invention relates to a ridge tile hook, comprising: a strip for placing on a ridge tile, which strip has an elongated slit in which a screw or nail is mounted, a first stop disposed at one side of the strip, for an end edge of the abovementioned ridge tile, and a second stop disposed at the opposite side of the strip, for an end edge of the next ridge tile.

Known ridge tile hooks of this type are fixed by means of three nails. One of the nails is hammered through the slit into a hole in the ridge tile concerned and into the ridge board on which the ridge tiles are resting; the other two nails are hammered into the ridge board through holes in a second strip of the ridge tile hook which connects to the abovementioned first stop and lies on the ridge board. These ridge tile hooks are therefore fixed by three fixing means. The hooks themselves are consequently relatively expensive and take too long to fit.

The object of the invention is to overcome these disadvantages, and to this end the ridge tile hook mentioned in the preamble is characterized in that a sliding piece is clamped in the abovementioned slit, through which sliding piece the screw or nail, which is an integral part and constitutes the only fixing element of the ridge tile hook, projects.

The hook is fixed by only one fixing means. Said means is preferably a screw which is inserted by means of an electric screwdriver. A nail, which may be a twisted nail, is also possible. The hook is cheaper and lighter.

In order to prevent the sliding piece from being pressed out of the slit, it is preferable for the sliding piece to be provided at the top side with a ring which engages on the abovementioned strip.

It is usual to make the second stop run through a bend of 90°. In order also to be able to place the fixing means of the hook under the end of the bent second stop, said stop is provided with a notch.

It is pointed out that US-A-2279943 discloses a wavy clip for a cladding element for the wall of a building. The clip consists of a strip and a hook-shaped part into which the bottom edge of a wall cladding element fits. The strip is provided with an elongated slit through which a screw or nail can be fitted. A washer is placed in such a way between the head of the screw or nail and the cladding element that when the screw is screwed or the nail is hammered into the cladding element the head of the screw or nail brings the edges of the washer into engagement with the boundary edges of the slit. There is no question of a sliding piece which is clamped in the slit when the screw is not screwed in or the nail not hammered in. When the clip is not fitted the screw or nail can fall out of the slit, and it does not form an integral part of the clip. Nor is there a stop at the edge of the clip opposite the hook-shaped part. The clip cannot be used as a ridge tile hook.

US-A-4314433 discloses a roof tile hook for fixing roof tiles, comprising: a strip with a hook-shaped end and an elongated slit for passing through a screw or nail. The slit does not have clamped therein a sliding piece through which the screw or nail projects in such a way that it forms an integral part of the roof tile. Nor does the strip have a stop at the end lying opposite the hook-shaped end.

The invention also relates to a ridge tile. In order to make overlapping ridge tiles connect to each other without gaps, and thus to achieve a better seal, it is preferable for said ridge tile to be provided with a recess near an end edge at the bottom side and top side, for the accommodation of the strip of a ridge tile hook for fixing an overlapping ridge tile.

The invention will now be explained in greater detail with reference to the figures.

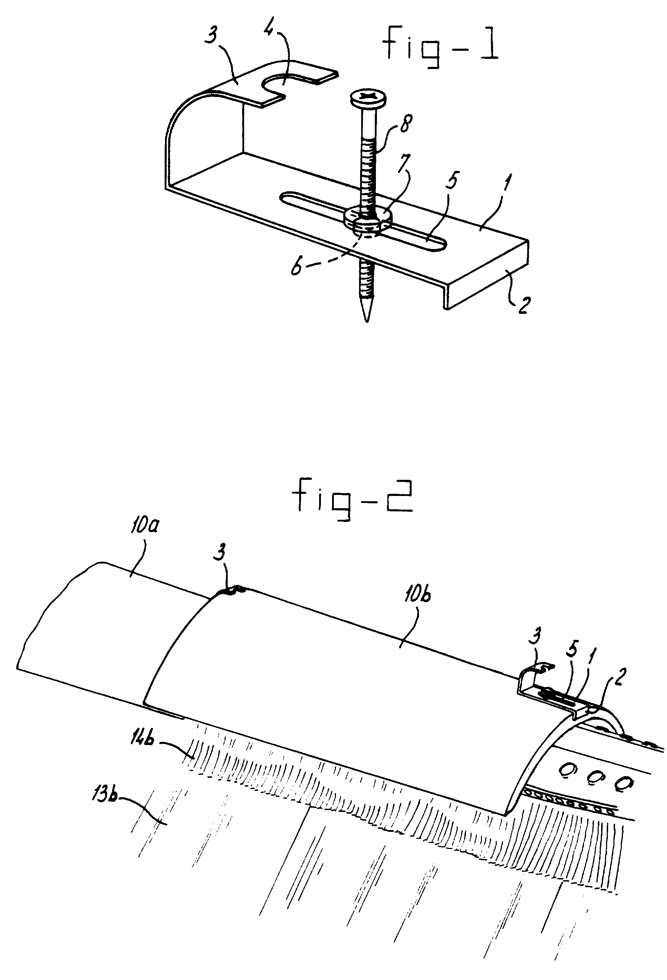

Figure 1 shows a perspective view of a ridge tile hook according to the invention.

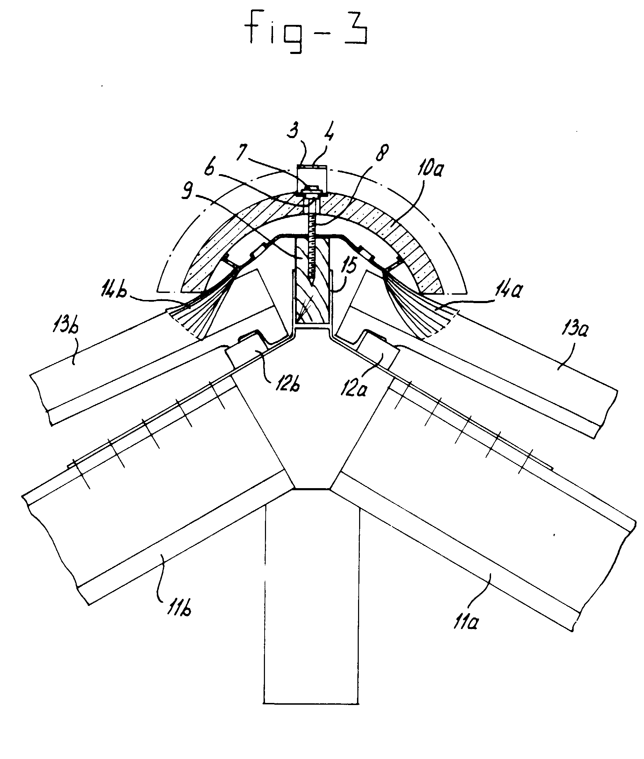

Figure 2 shows a perspective view of a part of a roof ridge.

Figure 3 shows a section through the top part of a sloping roof.

The ridge tile hook shown comprises a strip 1, having at one end a downward running stop edge 2 and at the other end an upward running stop 3 in the form of a flange bent through 90°, which flange has a notch 4 in the end edge. The strip 1 has cut out of it an elongated slit 5, in which a plastic sliding piece 6 with passage openings is clamped in such a way that it can be slid in the slit 5. The ring 7 is integral with the sliding piece and lies on the top surface of the strip 1, so that the sliding piece 6 cannot be pushed or driven out of the slit.

A screw 8 projects with its end through the openings of the sliding piece 6 and the ring 7.

The ridge tile hook is laid at one end of a ridge tile 10a resting on a ridge board 9 until the stop edge 2 goes into engagement with the end edge of said ridge tile. A hole is left open in the end part of said ridge tile. The screw is positioned in line with the hole in the ridge tile. The screw is then pressed or hammered through said hole and screwed into the wooden ridge board. The sliding piece 6 can be pushed up so far that the screw 8 projects through the notch 4 of the second stop 3. It is possible to slide the ridge tile hook to the right before the screw has been fully tightened, with the result that the overlap can be made smaller. If lines and figures are placed on the ridge tile, this overlap can be read on the ridge tile, which makes the device easier to use.

When it engages on the end edge of the ridge tile, the stop edge 2 prevents the ridge tile hook from turning when the screw 8 is being tightened.

A subsequent ridge tile 10b is laid on the fixed ridge tile 10a in such a way that an end edge thereof engages on the stop 3. The strip 1, the screw 8 and the stop edge 2 are then sealed off.

The ridge tile is provided with a recess at the bottom side and top side, for the accommodation of a strip 1 on the top surface of a ridge tile lying beneath in the overlapping region, and a recess is provided in one side edge of each ridge tile, for the accommodation of a part of the stop 3 of a ridge tile hook which is fitted on a tile beneath in the overlapping region.

The section shown in Figure 3 shows roof boards 11a, 11b, the top tile battens 12a, 12b, the top tiles 13a, 13b and the screens 14a, 14b. The latter screens serve to prevent birds and vermin from being able to enter the space below the ridge tiles. The ridge board bracket, in which the ridge board 9 is positioned, is indicated by 15.

The main advantage of the invention is that a ridge tile can be fixed extremely easily using only one fixing means. The ridge tile hook is also lighter and cheaper than known ridge tile hooks.

## Claims

1. Ridge tile hook, comprising:
a strip (1) for placing on a ridge tile, which strip has an elongated slit (5) in which a screw or nail (8) is mounted, a first stop (2) disposed at one side of the strip, for an end edge of the abovementioned ridge tile, and a second stop (3) disposed at the opposite side of the strip, for an end edge of the next ridge tile, characterized in that a sliding piece (6) is clamped in the abovementioned slit (5), through which sliding piece the screw or nail, which is an integral part and constitutes the only fixing element of the ridge tile hook, projects.

2. Ridge tile hook according to Claim 1, characterized in that the sliding piece (6) is provided at the top side with a ring (7) which engages on the abovementioned strip (1).

3. Ridge tile hook according to one of the preceding claims, characterized in that the second stop (3) is bent through 90°, and a notch (4) is provided in the free end of said stop.

4. Ridge tile with a hook according to claim 1, which is provided near one end edge at the top side and bottom side with a recess for the accommodation of the strip of a ridge tile hook for fixing an overlapping ridge tile.

## Patentansprüche

1. Haken für Firstziegel, der folgendes umfaßt:
einen Streifen (1) zum Anordnen auf einem Firstziegel, der einen länglichen Schlitz (5) aufweist, in dem eine Schraube oder ein Nagel (8) befestigt ist, einen ersten Anschlag (2) an einer Seite des Streifens, für eine Endkante des oben erwähnten Firstziegels, und einen zweiten an der entgegengesetzten Seite des Streifens angeordneten Anschlag (3), für eine Endkante des nächsten Firstziegels,
dadurch gekennzeichnet, daß
ein Gleitstück (6) in dem oben erwähnten Schlitz (5) festgeklemmt ist, wobei durch das Gleitstück die Schraube oder der Nagel hervorsteht, die (der) ein einstückiges Teil ist und das einzige Befestigungselement des Hakens für Firstziegel bildet.

2. Haken für Firstziegel nach Anspruch 1, dadurch gekennzeichnet, daß das Gleitstück (6) an der Oberseite mit einem Ring (7) ausgestattet ist, der auf dem oben erwähnten Streifen (1) einhakt.

3. Haken für Firstziegel nach einem der vorangegangenen Ansprüche, dadurch gekennzeichnet, daß der zweite Anschlag (3) um 90° gebogen ist und eine Kerbe (4) an dem freien Ende dieses Anschlags vorgesehen ist.

4. Firstziegel mit einem Haken nach Anspruch 3, der nahe einer Endkante an der Oberseite und an der Unterseite mit einem Rücksprung zum Anbringen des Streifens eines Hakens für Firstziegel zum Befestigen eines überlappenden Firstziegels ausgestattet ist.

## Revendications

1. Crochet pour tuile faîtière comprenant :
une bande (1) destinée à être placée sur une tuile faîtière, cette bande présentant une fente allongée (5) dans laquelle une vis ou un clou (8) est monté, une première butée (2) disposée sur un côté de la bande, et destinée au bord d'extrémité de la tuile faîtière mentionnée ci-dessus, et une seconde butée (3) disposée sur le côté opposé de la bande, et destinée au bord d'extrémité de la tuile faîtière suivante, caractérisé en ce qu'une pièce coulissement (6) est enserrée dans la fente (5), la vis ou le clou saillant à travers la pièce de coulissement (5), cette dernière étant monobloc et constituant le seul élément de fixation du crochet pour tuile faîtière.

2. Crochet pour tuile faîtière selon la revendication 1, caractérisé en ce que la pièce de coulissement (6) est munie, sur le dessus, d'une bague (7) qui vient en prise dans la bande (1).

3. Crochet pour tuile faîtière selon l'une des revendications précédentes, caractérisé en ce que la seconde butée (3) est courbée à 90°, et en ce qu'une encoche (4) est prévue dans l'extrémité libre de la butée.

4. Tuile faîtière munie d'un crochet selon la revendication 1, munie, près d'un bord d'extrémité, sur le dessus et sur le dessous, d'un évidement permettant de loger la bande d'un crochet pour tuile faîtière afin de fixer une tuile faîtière chevauchante.
